# EUROPÄISCHE PATENTSCHRIFT

(11) **EP 1 721 764 B1**
(45) Veröffentlichungstag und Bekanntmachung des Hinweises auf die Patenterteilung: **30.06.2010**
(21) Anmeldenummer: 06008350.8
(22) Anmeldetag: 21.04.2006
(51) Int. Cl.: B60H 1/00

(54) **Heizungs- und Klimaanlage**
Heating- and air-conditioning system
Système de chauffage et climatisation

(30) Priorität: 10.05.2005 DE 102005022368
(43) Veröffentlichungstag der Anmeldung: 15.11.2006
(73) Patentinhaber: Behr GmbH & Co. KG, 70469 Stuttgart (DE)
(72) Erfinder: Klingler, Dietrich, Dipl.-Ing., 73540 Heubach (DE); Schwahn, Werner, 71701 Schwieberdingen (DE)

(56) Entgegenhaltungen:
- DE-A1- 10 202 969
- DE-A1- 19 739 578
- DE-B3- 10 311 266
- US-B1- 6 439 296

## Beschreibung

Die Erfindung betrifft eine Heizungs- und/oder Klimaanlage, insbesondere für ein Kraftfahrzeug gemäß dem Oberbegriff des Anspruchs 1.

Der Erfindung liegt das Problem zugrunde, dass bei hohen Kühlanforderungen an eine Klimaanlage oder bei Vorliegen keiner Heizleistungsanforderung an eine Heizungsanlage, beispielsweise bei Fahrten im Hochsommer, die durch den Kühlwärmetauscher abgekühlte Luft durch den heißen Heizkörper nicht wieder oder nur geringfügig erwärmt werden soll, wenn die kalte Luft an dem Heizkörper vorbei strömt. Dieses Problern tritt insbesondere bei luftseitig geregelten Klimaanlagen auf, bei denen der Heizkörper permanent von dem heißen Kühlwasser durchströmt wird.

Zur Lösung dieses Problems ist in dem japanischen Gebrauchsmuster JP 58-136813 vorgeschlagen, vor und hinter dem Heizkörper Klappen vorzusehen, so dass der Heizkörper durch die Klappen abgeschirmt ist. Diese Lösung ist jedoch kostenaufwendig, da zum einen eine Vielzahl von Luftklappen angeordnet ist und zum anderen der erforderliche Bauraum erhöht wird.

Aus der DE 197 50 381 ist ein Klimagerät bekannt, bei der zur Lösung dieses Problems der Heizkörper in einem bestimmten Winkel leicht gekippt angeordnet ist, so dass die heiße Luft so aufsteigt, dass sie mit der abgekühlten Luft nur in beschränktem Maß vermischt wird. Zusätzlich ist oberhalb des Heizkörpers eine kleine Abschirmplatte bzw. schirmförmige Führung angeordnet, so dass die heiße Luft nicht in den Raum oberhalb des Heizkörpers, in dem die kalte Luft an dem Heizkörper vorbeigeführt wird, aufsteigen kann. Dieses Klimagerät hat den Nachteil, dass die Abschirmwirkung gegenüber der Kaltluft nur unzureichend ist und durch das oberhalb des Heizkörpers angeordnete Abschirmelement die Luftströmung, insbesondere der aus der unteren Hälfte des Kühlwärmetauschers austretende Kaltluftstrom stark behindert wird.

Des Weiteren ist aus der DE 102 02 969 A1 als nächster Stand der Technik ein Abschirmelement bekannt, das direkt vor oder nach dem Heizwärmetauscher angeordnet Für eine Abschirmung des gesamten Luftstroms, muss hierzu das Abschirmelement im Prinzip mindestens die Fläche des Heizwärmetauschers abdecken. Durch die unmittelbare Nähe zum Heizwärmetauscher, ist das Abschirmelement zusätzlich einer ständigen Wärmebelastung ausgesetzt.

Ausgehend von diesem Stand der Technik ist es Aufgabe der Erfindung, ein verbessertes Klimagerät bereitzustellen, mit der die vorgenannten Nachteile vermieden werden können.

Diese Aufgabe wird gelöst durch eine Heizungs- und/oder Klimaanlage, insbesondere für ein Kraftfahrzeug, mit den Merkmalen des Anspruchs 1.

Erfindungsgemäß weist eine Heizungs- und/oder Klimaanlage, insbesondere für ein Kraftfahrzeug, mit einem Gehäuse, einem, in einem Lufterwärmzweig angeordneten Heizwärmetauscher mit einer Vorderfläche auf der Luftanströmseite und einer Rückfläche auf der Luftabströmseite und einem Luftstromsteuermittel, zumindest ein Wärmeabschirmelement auf, wobei das Wärmeabschirmelement zumindest bereichsweise beabstandet von den Flächen des Heizwärmetauschers ausgebildet ist. Mittels dieser Anordnung, kann die Aufwärmung der Kaltluft wirksam verhindert und die ständige Wärmebelastung des Wärmeabschirmelements durch die bereichsweise Beabstandung zum Heizwärmetauscher begrenzt bzw. reduziert werden. Bevorzugt ist zumindest bereichsweise zwischen dem, dem Heizwärmetauscher oder Heizkörper zugewandten Bereich des Wärmeabschirmelements ein Abstand von etwa 20 mm bis 60 mm oder bis 100 mm, insbesondere bis 120 mm vorgesehen, insbesondere bei paralleler Anordnung von Heizkörper und Wärmeabschirmelement.

Erfindungsgemäß ist zumindest ein Wärmeabschirmelement luftanström- und vorzugsweise ein weiteres Wärmeabschirmelement luftabströmseitig des Heizwärmetauschers angeordnet.

Die Beabstandung zumindest eines Bereichs eines Wärmeabschirmelements vom Heizwärmetauscher wird erfindungsgemäß dadurch erreicht, dass das Wärmeabschirmelement in einem Winkel geneigt zur Vorder- und/oder Rückfläche des Heizwärmetauschers ausgebildet ist. Bevorzugt beträgt der Winkel zwischen der Vorder- und/oder Rückfläche des Heizwärmetauschers und dem Wärmeabschirmelement mehr als 45°, insbesondere etwa 90°.

Weiter ist es vorteilhaft, wenn zumindest ein Wärmeabschirmelement mittels eines Wandbereichs des Gehäuses getrennt vom Heizwärmetauscher ausgebildet und/oder das Wärmeabschirmelement lateral versetzt zum Heizwärmetauscher angeordnet ist.

Vorteilhafterweise ist zumindest ein Wärmeabschirmelement zellenartig aufgebaut, wobei Zellwände Strömungsöffnungen einschließen beziehungsweise ausbilden. Dadurch ist in Durchströmungsrichtung des Heizkörpers dem Luftstrom, der in den Heizkörper eintritt und/oder aus dem Heizkörper austritt, durch das Wärmeabschirmeiement nur ein geringer Widerstand entgegengesetzt, so dass durch das Wärmeabschirmelement nur ein vernachlässigbarer Druckabfall auftritt. Gleichzeitig wird durch das Wärmeabschirmelement eine bessere Beaufschlagung, also eine gleichmäßigere Anströmung bzw. Ausströmung, des Heizkörpers mit Luft erreicht. Die auf der Luftanströmseite bzw. in der Nähe der Luftabströmseite des Heizkörpers vorbeiströmende Kaltluft wird im Kühlbetrieb der Klimaanlage dennoch wirksam von dem Heizkörper ferngehalten und somit eine Aufwärmung dieser Luft verhindert.

In Weiterbildung der Erfindung sind die Durchströmungsöffnungen vorzugsweise zellenartig oder wabenartig ausgebildet. Die zellenartigen Öffnungen weisen einen runden oder eckigen, vorzugsweise viereckigen, rechteckigen, quadratischen oder sechseckigen Querschnitt auf. Die wabenartigen Öffnungen weisen einen sechseckigen Querschnitt auf.

Indem die Querschnittsflächen der einzelnen Flächen/Zellen unterschiedlich groß sein können und/oder eine unterschiedliche Form aufweisen, kann die Abschirmwirkung des Wärmeabschirmelementes bereichsweise unterschiedlich ausgebildet sein. Wenn die Querschnittsfläche kleiner ist, wird die Abschirmwirkung größer sein und umgekehrt.

Vorzugsweise kann die Tiefe des Wärmeabschirmelementes auch variieren.

In Weiterbildung der Erfindung beträgt die Höhe der Zellwände vorzugsweise zwischen 2 und 20 mm oder zwischen 3 und 15 mm abhängig von den Anforderungen an Bauraum und Abschirmwirkung. Besonders bevorzugt weisen die Zellwände eine Höhe von 5 bis 12 mm, insbesondere 6 bis 10 mm oder 8 bis 10 mm auf, was einen optimalen Kompromiss zwischen benötigtem Bauraum und Abschirmwirkung ergibt, denn je höher die Zellwände desto größer wird die Abschirmwirkung sein, wobei auch der Bauraum zunimmt. Je nach Erfordernis kann es sich auch als sinnvoll erweisen einen beliebigen der oben genannten Zahlen als Intervallanfangs bzw. -endwert zu verwenden. Beispielhaft sei ein Bereich zwischen 2 und 6 mm, insbesondere zwischen 3 und 5 mm genannt für geringe Anforderungen an die Abschirmwirkung oder zwischen 10 und 15 mm, insbesondere bis zu 20 mm für eine entsprechend höhere Abschirmwirkung.

Für eine kostengünstige Herstellung der Heizungs- und/oder Klimaanlage ist es vorteilhaft, wenn das Wärmeabschirmelement im Gehäuse der Heizungs- und/oder Klimaanlage wieder lösbar befestigbar ist, somit beispielsweise aufsteckbar, anclipsbar, einschiebbar und/oder schraubbar ausgeführt ist.

Bevorzugte Ausgestaltungen sind durch die Merkmale der Unteransprüche beschrieben.

Im Folgenden wird die Erfindung anhand eines Ausführungsbeispiels unter Bezugnahme auf die Zeichnung im einzelnen erläutert. In der Zeichnung zeigen:
- Fig. 1: einen Querschnitt einer nicht erfindungsgemäßen Klimaanlage mit einem Wärmeabschirmelement,
- Fig. 2: einen Querschnitt einer Klimaanlage mit einem Wärmeabschirmelement,
- Fig. 3: einen Querschnitt eines Ausführungsbeispiels einer erfindungsgemäßen Klimaanlage mit einem Wärmeabschirmelement,
- Fig. 4: ein Ansicht eines Wärmeabschirmelements und
- Fig. 5a: ein Schnitt eines Wärmeabschirmelements,
- Fig. 5b: ein Schnitt eines Wärmeabschirmelements,
- Fig. 5c: ein Schnitt eines Wärmeabschirmelements,
- Fig. 6a: ein Ausschnitt eines Wärmeabschirmelements,
- Fig. 6b: ein Ausschnitt eines Wärmeabschirmelements,
- Fig. 6c: ein Ausschnitt eines Wärmeabschirmelements,
- Fig. 6d: ein Ausschnitt eines Wärmeabschirmelements.
- Fig. 7: ein Ausschnitt eines Wärmeabschirmelements,
- Fig. 8: ein Ausschnitt eines Wärmeabschirmelements,
- Fig. 9: eine perspektivische Ansicht einer Klimaanlage .

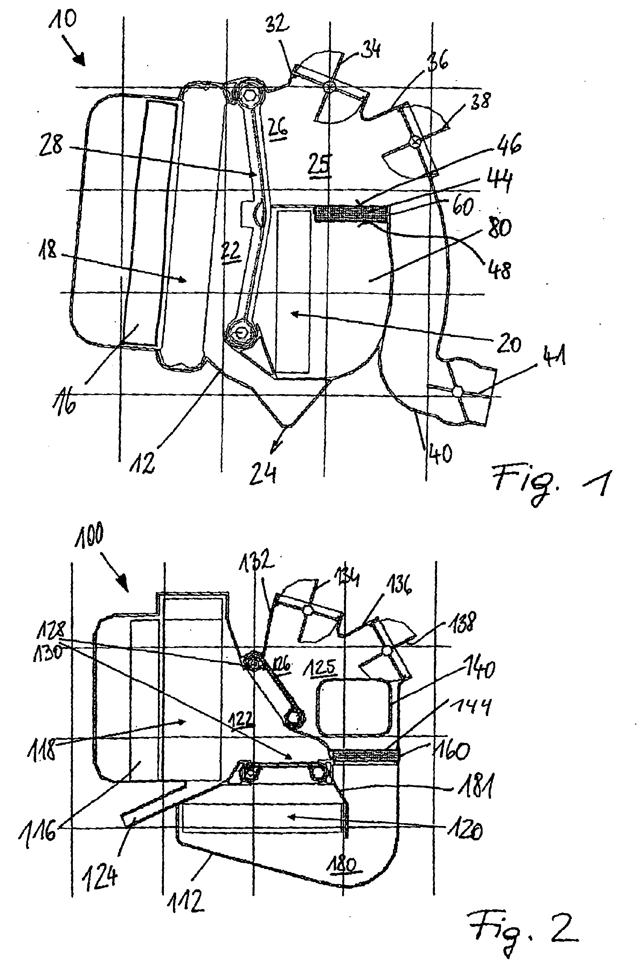

Gemäß Fig.1 weist eine Klimaanlage 10 ein Gehäuse oder Luftführungsgehäuse 12 auf, in dem ein Gebläse (in den Figuren nicht dargestellt), ein Luftfilter 16, ein Kühlwärmetauscher 18, wie beispielsweise ein Verdampfer, und ein Heizkörper 20 zur Förderung und Konditionierung der Luft angeordnet sind.

Die Luft wird über das Gebläse angesaugt und in Richtung des Luftfilters 16 abgegeben. Die gefilterte Luft wird in dem Kühlwärmetauscher 18, der beispielsweise ein Verdampfer eines nicht dargestellten Kältemittelkreises sein kann, abgekühlt. Vom Verdampfer 18, tritt die abgekühlte Luft in einen Kaltluftbereich 22 ein. Im Verdampfer 18 eventuell entstehendes Kondenswasser kann über einen Ablaufkanal 24 aus dem Luftführungsgehäuse 12 ablaufen. Die Kaltluft kann entweder durch den Heizkörper 20 geführt und dort erwärmt werden und vom Heizkörper 20 aus über einen Warmluftkanal 80 in einen Luftmischraum 25 eintreten oder über einen Kaltluftbypass 26, der mit einer Klappe 28 verschließbar ist, an dem Heizkörper 20 vorbeigeführt und in den Luftmischraum 25 eintreten. Gemäß der Anordnung in Fig.1 ist die Klappe 28 als Rollbandklappe oder -kassette ausgeführt. Je nach Stellung des Rollbandes gelangt in den Mischraum nur gekühlte Luft, nur durch den Heizkörper 20 erwärmte Luft oder eine Mischung aus gekühlter und erwärmter Luft.

In Fig. 1 ist stromabseitig des Heizkörpers 20 ein Wärmeabschirmelement 44 angeordnet. Vom Luftmischraum 25 zweigen ein Defrostluftkanal 32, der mit einer Defrostluftklappe 34 verschließbar ist und ein Belüftungskanal 36, der mit einer Belüftungsklappe 38 verschließbar ist, ab. Des Weiteren zweigt von dem Luftmischraum 25 ein Fußraumluftkanal 40 ab, der über eine Klappe 41 ebenfalls verschließbar sein kann.

In dem in Fig.1 dargestellten Beispiel sind der Kühlwärmetauscher 18 und der Heizkörper 20 im Wesentlichen parallel zueinander eng benachbart angeordnet. Im maximalen Kühlbetrieb, wenn die Klappe 28 den Durchtritt der Luft zum Heizkörper 20 verschließt, wird die gesamte Luft ausschließlich vom Kaltluftraum 22 durch den Kaltluftbypass 26 in den Mischraum 25 geführt. Von diesem strömt sie weiter über die Luftverteilkanäle (32, 36, 40) in den Fahrzeuginnenraum. Damit die Kaltluft beim Vorbeiströmen am Warmluftkanal 80 nicht erwärmt wird, ist luftabströmseitig des Heizkörpers 20 am Ende des Warmluftkanals 80 ein Wärmeabschirmelement 44 angeordnet, an dessen Kaltluftsefte 46 Kaltluft vorbeiströmen kann und dessen Warmluftseite 48 zumindest in einem Bereich beabstandet von der Rückfläche des Heizkörpers 20 ist. Die Beabstandung kommt vorliegend durch Anordnung des Wärmeabschirmelements im Winkel von ca. 90° zur Vorder- bzw. Rückfläche des Heizkörpers 20 zustande. Dabei ist das Wärmeabschirmelement 44 von einer Aufnahme 60 im Gehäuse 12 der Klimaanlage aufgenommen. Das Wärmeabschirmelement wird durch die Beabstandung vom Heizkörper einer relativ geringen Wärmebelastung ausgesetzt ohne in seiner Wirkung beeinträchtigt zu sein.

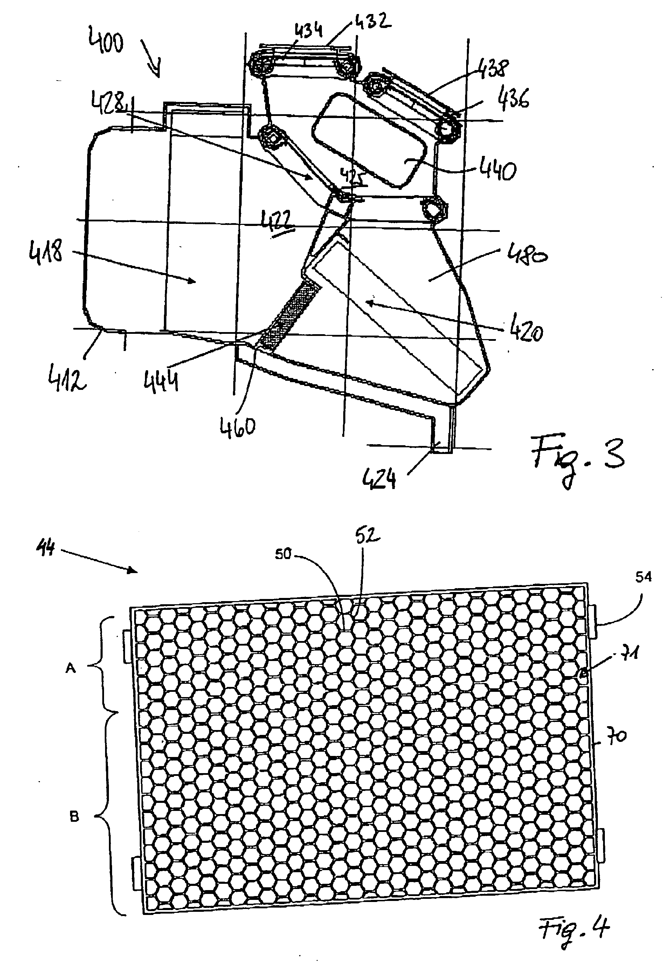

Gemäß Figur 4 ist das Wärmeabschirmelement 44 derart aufgebaut, dass es Öffnungen aufweist und über seine gesamte Fläche im Wesentlichen die gleiche Tiefe besitzt. Gemäß einem nicht dargestellten weiteren Ausführungsbeispiel weist das Wärmeabschirmelement 44 über seine Höhe betrachtet eine veränderliche Tiefe in Luftströmungsrichtung durch die Öffnungen auf. Somit sind die Öffnungen oder Durchlässe durch das Wärmeabschirmelement unterschiedlich tief ausgebildet. In einem ersten Bereich kann die Tiefe größer sein als in einem zweiten Bereich. Dadurch kann eine Variation der Tiefe mit der Richtung der an dem Element vorbei strömenden Luft erreicht werden. So ist das Wärmeabschirmelement beispielsweise keilförmig ausgebildet. Der Bereich maximaler Tiefe kann auch derart ausgebildet sein, dass er nicht an einem Randbereich liegt sondern in einer mittleren Zone des Elementes, in Richtung der vorbeiströmenden Luftstroms betrachtet.

Das in Fig. 4 in einer Ansicht dargestellte Wärmeabschirmelement 44 ist bevorzugt zellenartig aufgebaut, wobei Zellwände 50 Durchströmungsöffnungen 52 einschließen. Die Durchströmungsöffnungen 52 weisen einen sechseckigen Querschnitt auf, so dass das Wärmeabschirmelement 44 wabenartig aufgebaut ist. Selbstverständlich sind andere Geometrien, beispielsweise rund, viereckig und viele andere Geometrien, denkbar und möglich. Die Zellen können regelmäßig oder unregelmäßig oder symmetrisch oder unsymmetrisch ausgebildet und/oder angeordnet sein, wobei auch eine Mehrzahl von Geometrien regelmäßig oder unregelmäßig verteilt angeordnet sein können.

In dem dargestellten Ausführungsbeispiel sind sämtliche Durchströmungsöffnungen 52 identisch ausgebildet. Es ist aber auch denkbar, dass in verschiedenen Bereichen des Wärmeabschirmelementes 44, die Querschnittsflächen der Durchströmungsöffnungen unterschiedlich sein können. So könnten beispielsweise die Querschnittsflächen in einem Bereich A des Wärmeabschirmelements 44, der näher am Heizkörper 20 liegt, kleiner ausgebildet sein, um dort die Wärmeabschirmwirkung zu erhöhen, als in einem Bereich B, welcher weiter vom Heizkörper 20 beabstandet ist. Es kann jedoch auch zweckmäßig sein, wenn die Zellen mit verschiedenen Größen auf der gesamten Fläche regelmäßig oder unregelmäßig verteilt sind. Dies kann in Abstimmung des Heizkörpers, seiner Ausbildung und Lage, ausgewählt werden. Das Wärmeabschirmelement weist einen zumindest teilweise umlaufenden Randbereich 70 auf, der mit dem Wabengitter 71 verbunden ist oder mit ihm einteilig ausgebildet ist. Vorzugsweise ist sowohl der Randbereich als auch das Zellen- bzw. Wabengitter aus Kunststoffmaterial, z.B. Polyamid, hergestellt. Dabei kann das gesamte Teil mit Randbereich und Wabengitter in einem Spritzgußverfahren herstellbar sein. Auch kann das Wabengitter aus einem anderen oder dem gleichen Material wie der Randbereich herstellbar und mit diesem zusammenfügbar sein.

Bevorzugt beträgt die Höhe der Zellwände, die der Breite D des Wärmeabschirmelements entspricht, zwischen 6 und 15 mm.

Das Wärmeabschirmelement 44 bedeckt vorzugsweise vollständig den Strömungsquerschnitt eines Warmluftkanals im Bereich des Gehäuses, in welchem es angeordnet ist. So entspricht dieser Bereich beispielsweise der Klimaanlage nach Fig.1 dem Querschnitt des Warmluftkanals 80. Durch die im Winkel von 90° zum Heizkörper 20 geneigte Anordnung des Wärmeabschirmelements 44, kann dieses im Vergleich zur Anordnung unmittelbar am Heizkörper 20, wesentlich kleiner ausgebildet werden, da man nicht auf die Abmessungen des Heizkörpers 20 beschränkt ist.

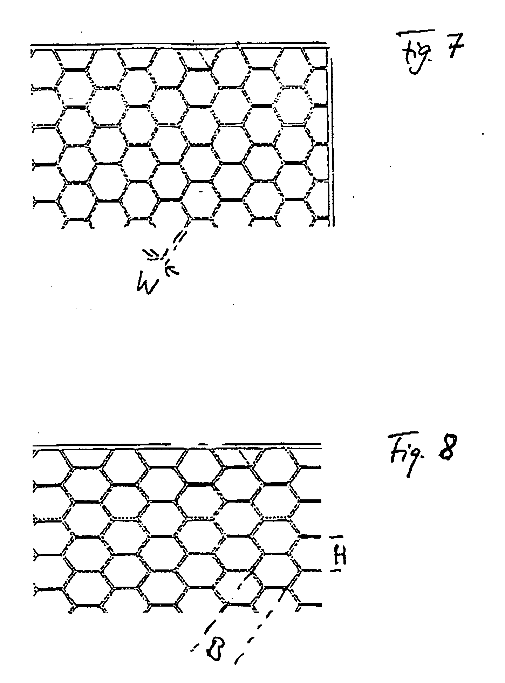

Die Figuren 7 und 8 zeigen Ausschnitte des Zellgitters eines Wärmeabschirmelementes, wobei in Figur 7 die Zellen gleichförmig und punktsymmetrisch sind und in Figur 8 liniensymmetrisch, wobei die Höhe H der Zellen geringer ist als die Breite B.

Die Wandstärke W der Zellen ist im Bereich von ca. 0,5 mm, vorzugsweise zwischen 0,1 mm und 1 mm.

Die Figur 2 zeigt eine nicht erfindungsgemäße Klimaanlage 100 mit einem Luftführungsgehäuse 112, in dem ein Gebläse (in der Fig. nicht dargestellt), ein Luftfilter 116, ein Kühlwärmetauscher 118, wie beispielsweise ein Verdampfer, und ein Heizkörper 120 zur Förderung und Konditionierung der Luft angeordnet sind. Die Luft wird über das Gebläse angesaugt und in Richtung des Luftfilters 116 abgegeben. Die gefilterte Luft wird in dem Kühlwärmetauscher 118, der beispielsweise ein Verdampfer eines nicht dargestellten Kältemittelkreises sein kann, abgekühlt. Vom Verdampfer 118, tritt die abgekühlte Luft in einen Kaltluftbereich 122 ein. Im Verdampfer 118 eventuell entstehendes Kondenswasser kann über einen Ablaufkanal 124 aus dem Luftführungsgehäuse 112 ablaufen. Die Kaltluft kann entweder durch den Heizkörper 120 geführt und dort erwärmt werden und vom Heizkörper 120 aus in einen Luftmischraum 125 eintreten oder über einen Kaltluftbypass 126, der mit einer Bypassklappe 128, vorliegend einer Rollbandkassette verschließbar ist, an dem Heizkörper 120 vorbeigeführt und in den Luftmischraum 125 eintreten. Anströmseitig des Heizkörpers 120 ist eine Warmluftklappe 130 vorliegend ebenfalls als Rollbandkassette ausgebildet, angeordnet, mit der der Luftstrom durch den Heizkörper gesperrt werden kann. Vom Luftmischraum 125 zweigen ein Defrostluftkanal 132, der mit einer Defrostluftklappe 134 verschließbar ist und ein Belüftungskanal 136, der mit einer Belüftungsklappe 138 verschließbar ist, ab. Des Weiteren zweigt von dem Luftmischraum 125 ein Fußraumluftkanal 140 ab, der über eine nicht dargestellte Klappe ebenfalls verschließbar sein kann. In dem dargestellten Beispiel sind der Kühlwärmetauscher 118 und der Heizkörper 120 im Wesentlichen senkrecht zueinander angeordnet, wobei zwischen ihnen die Klappe 130 angeordnet ist. Im maximalen Kühlbetrieb, wenn die Warmluftklappe 130 geschlossen ist, wird die gesamte Luft ausschließlich vom Kaltluftraum 122 durch den Kaltluftbypass 126 geführt, wobei sie parallel zum Heizkörper 120 in Richtung Bypasskanal 126 strömt. Damit die Kaltluft beim Durchströmen des Bereichs 125 nicht erwärmt wird, ist erfindungsgemäß beabstandet vom Heizkörper 120, luftabströmseitig des Heizkörpers 120 ein Wärmeabschirmelement 144 angeordnet, welches im Wesentlichen die Querschnittsfläche des Warmluftkanals 180 im Bereich der Mündung in den Mischraum 125 überdeckt. Dabei ist das Wärmeabschirmelement 144 von einer Aufnahme 160 im Gehäuse 112 aufgenommen. In dem dargestellten Beispiel sind die Flächen des Heizkörpers und des Wärmeabschirmelements im Wesentlichen parallel bzw. ist das Wärmeabschirmelement in einem Winkel von 180° zu den Flächen des Heizkörpers 120 angeordnet. Durch den lateralen Versatz von Heizkörper 120 und Wärmeabschirmelement 144 sind diese so voneinander beabstandet, dass die Wärmebelastung des Wärmeabschirmelements 144 gering gehalten wird. Des Weiteren erweist sich hinsichtlich der Verringerung der Wärmebelastung die Ausbildung der Zwischenwand 181, bzw. die Anordnung des Heizkörpers und des Wärmeabschirmelements 144 auf gegenüberliegenden Seiten der Zwischenwand 181 als vorteilhaft.

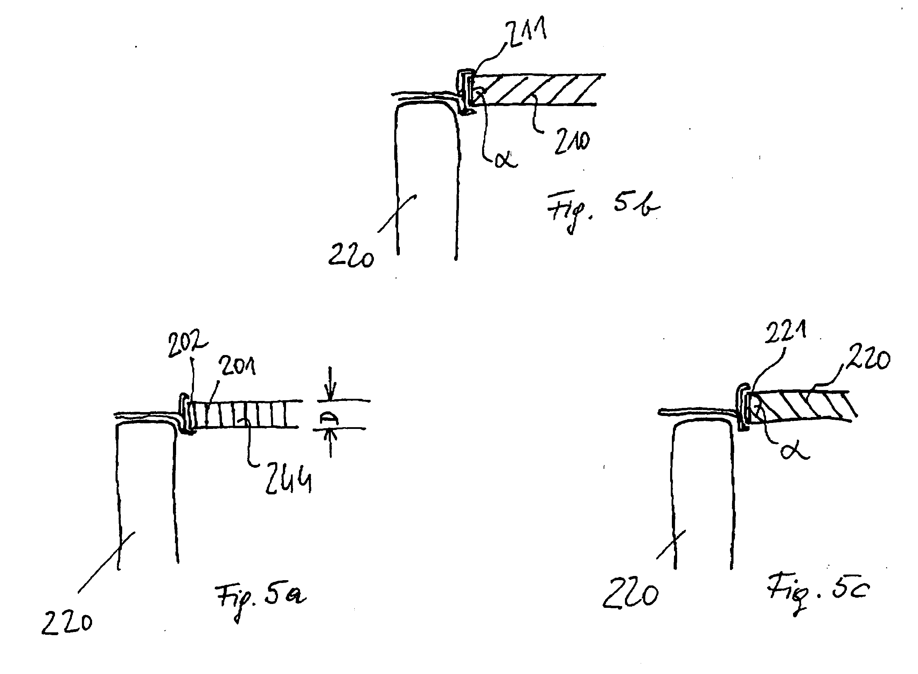

Die Figuren 5a bis 5c zeigen Ausschnitte von Anordnungen von einem Wärmeabschirmelement 244 in einem Winkel von ca. 90° zu einem Heizkörper 220, wobei in Figur 5a die Zellwände 201 im wesentlichen horizontal bzw. parallel zur Wandung 202 des zumindest teilweise umlaufenden Rahmens ausgerichtet sind. In den Figuren 5b und 5c sind die Wandungen 210 und 220 derart ausgerichtet, dass ein Winkel zwischen Wandungen der Zellen und dem Rahmen 211 und 221 vorgesehen ist, so dass im Falle der Figur 5b der Winkel α kleiner als 90 ° ist und im Falle der Figur 5c der Winkel α größer als 90 ° ist.

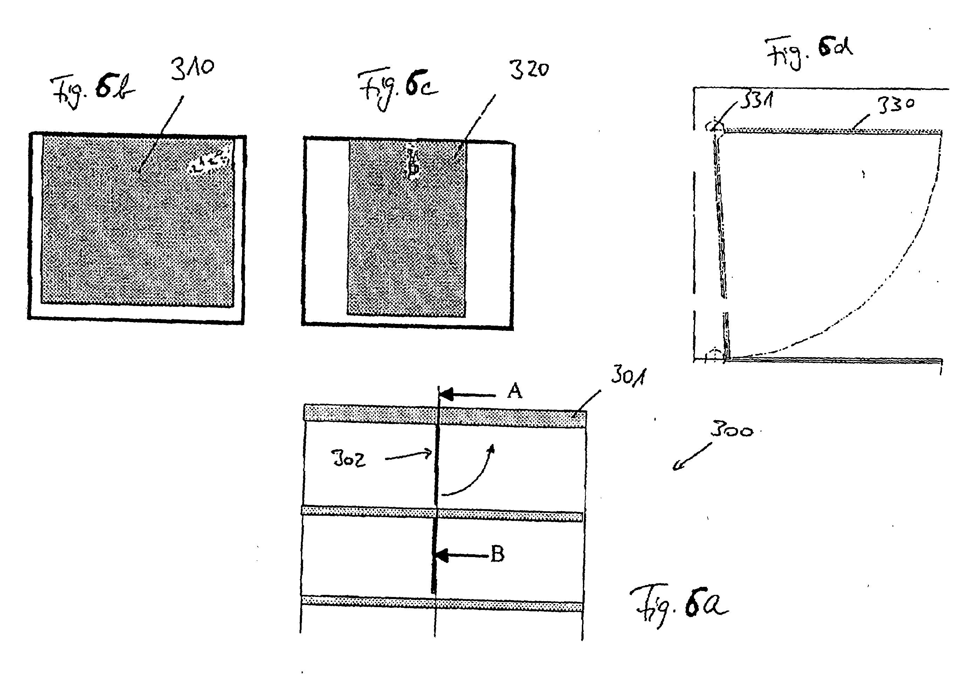

Weiterhin ist es zweckmäßig, wenn zumindest einzelne oder alle Zellen der Durchtrittskanäle des Wärmeabschirmelements Verschlusselemente aufweisen, die einen Luftstrom in eine Richtung durch das Element zumindest teilweise verhindern bzw. mindern. In den Figuren 6a bis 6d sind solche Verschlusselemente als Klappen oder Fasern dargestellt, die vorzugsweise in eine Richtung beweglich gehalten sind und einen Luftstrom zur Aufwärmung eines vorbeiströmenden Mediums verhindern. Diese Elemente können als Klappen eingesetzt sein oder angespritzt sein, wobei das Material der Klappenflügel aus anderem Material sein können als das Material der Zellwände. Die Figur 6a zeigt einen Ausschnitt einer Anordnung eines Wärmeabschirmelementes 300, wobei eine Klappe 302 in einer Zelle angeordnet ist und sich gemäß dem Pfeil öffnen und schließen kann. Die Klappe ist an der Zellwand 302 befestigt oder an dieser angeordnet, wie auch ggfs. einstückig ausgebildet. Die Figuren 6b und 6c zeigen schematisch Ausführungsbeispiele von Klappenflügeln 302, wobei der Flügel 310 der Figur 6b im wesentlichen die gesamte Querschnittsfläche verschließt, lässt der Flügel der Figur 6c einen Bereich frei und er deckt lediglich einen teil der Querschnittsfläche ab. Die Figur 6d zeigt einen Klappenflügel im Schnitt wobei zu erkennen ist, dass der Flügel 330 an einer Drehlagerung 331 aufgehängt ist.

In dem In Fig.3 dargestellten Ausführungsbeispiel ist eine Klimaanlage 400 mit einem Luftführungsgehäuse 412 dargestellt, in dem ein Gebläse (in der Fig. 3 nicht dargestellt), ein Kühlwärmetauscher 418, wie beispielsweise ein Verdampfer, und ein Heizkörper 420 zur Förderung und Konditionierung der Luft angeordnet sind. Die gefilterte Luft wird in dem Kühlwärmetauscher 418, beispielsweise ein Verdampfer, abgekühlt. Vom Verdampfer 418, tritt die abgekühlte Luft in einen Kaltluftbereich 422 ein. Im Verdampfer 418 eventuell entstehendes Kondenswasser kann über einen Ablaufkanal 424 aus dem Luftführungsgehäuse 412 ablaufen. Die Kaltluft kann entweder durch den Heizkörper 420 geführt und dort erwärmt werden und vom Heizkörper 420 aus in einen Luftmischraum 425 eintreten oder direkt ohne Passieren des Heizkörpers in den Luftmischraum gelangen. Der Eintritt der Kaltluft bzw. der Warmluft in den Mischraum wird über eine V-förmig angeordnete Klappe 428, vorliegend eine Rollbandkassette mit zwei in einem stumpfen Winkel zueinander angeordneten Schenkeln, gesteuert bzw. geregelt. Im Unterschied zu den vorhergehenden Beispielen ist das Wärmeabschirmelement 444 anströmseitig des Heizkörpers 420 angeordnet. Vom Luftmischraum 425 zweigen wieder ein Defrostluftkanal 432, der mit einer Defrostluftklappe 434 verschließbar ist und ein Belüftungskanal 436, der mit einer Belüftungsklappe 438 verschließbar ist, ab. Des Weiteren zweigt von dem Luftmischraum 425 ein Fußraumluftkanal 440 ab, der über eine nicht dargestellte Klappe ebenfalls verschließbar sein kann. In dem dargestellten Ausführungsbeispiel sind der Kühlwärmetauscher 418 und der Heizkörper 420 in etwa in einem Winkel von 45° zueinander angeordnet, wobei zwischen ihnen lediglich das Wärmeabschirmelement 444 angeordnet ist. Im maximalen Kühlbetrieb, wenn die Klappe 428 den Austritt aus dem Lufterwärmzweig 480 verschließt, wird die gesamte Luft ausschließlich vom Kaltluftraum 422 direkt in den Mischraum 425 geführt. Um die Erwärmung der Kaltluft beim Durchströmen des Kaltluftraums 422 in den Mischraum 425 möglichst wenig zu erwärmen, ist erfindungsgemäß beabstandet vom Heizkörper 420, luftanströmseitig des Heizkörpers 120 ein Wärmeabschirmelement 444 angeordnet, welches im Wesentlichen die Querschnittsfläche des Eintrittskanals zum Heizkörper 420 überdeckt. Dabei ist das Wärmeabschirmelement 444 von einer Aufnahme 460 im Gehäuse 412 aufgenommen. In dem dargestellten Ausführungsbeispiel sind die Flächen des Heizkörpers und des Wärmeabschirmelements im Wesentlichen in einem Winkel von 90° zueinander angeordnet.

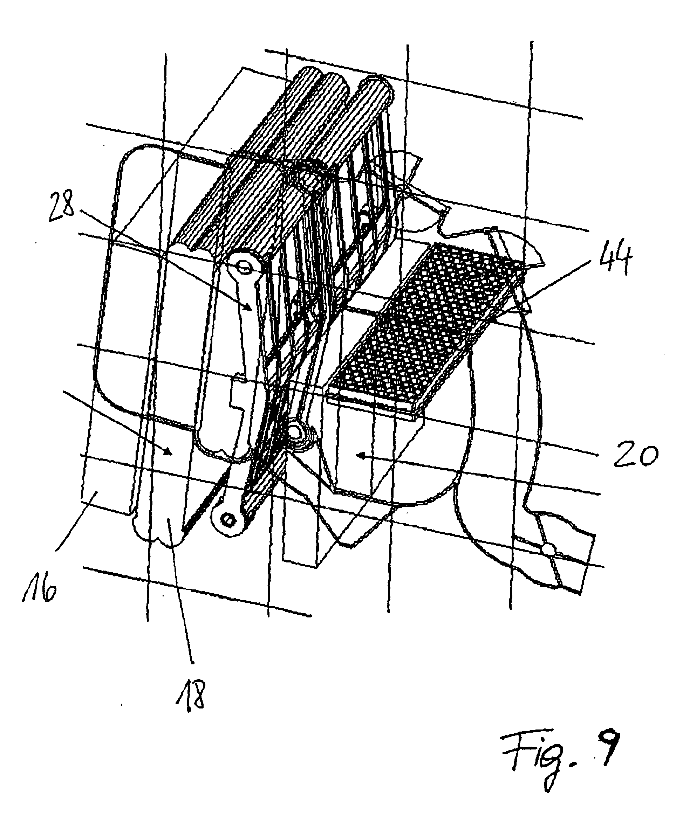

In Fig.9 ist im Wesentlichen eine perspektivische Ansicht der bekannten Klimaanlage gemäß Fig.1 gezeigt. Besonders deutlich wird die kompakte Bauweise der Klimaanlage, wobei das Wärmeabschirmelement 44 in seiner Flächenausdehnung nur etwa die Hälfte einer Heizkörperfläche einnimmt.

## Patentansprüche

1. Heizungs- und/oder Klimaanlage, insbesondere für ein Kraftfahrzeug, mit einem Gehäuse, einem, in einem Lufterwärmzweig angeordneten Heizwärmetauscher (420) mit einer Vorderfläche auf der Luftanströmseite und einer Rückfläche auf der Luftabströmseite, einem Luftstromsteuermittel und zumindest einem Wärmeabschirmelement (444), wobei das Wärmeabschirmelement (444) zumindest bereichsweise beabstandet von den Flächen des Heizwärmetauschers (420) ausgebildet und luftanströmseitig des Heizwärmetauschers angeordnet ist **dadurch gekennzeichnet, dass** das Wärmeabschirmelement (444) in einem Winkel geneigt zur Vorder- und/oder Rückfläche des Heizwärmetauschers (420) angeordnet ist.

2. Vorrichtung nach Anspruch 1, **dadurch gekennzeichnet, dass** zumindest ein Wärmeabschirmelement luftabströmseitig des Heizwärmetauschers angeordnet ist.

3. Vorrichtung nach einem der vorhergehenden Ansprüche, **dadurch gekennzeichnet, dass** zumindest ein Wärmeabschirmelement mittels eines Wandbereichs des Gehäuses getrennt vom Heizwärmetauscher ausgebildet ist.

4. Vorrichtung nach einem der vorhergehenden Ansprüche, **dadurch gekennzeichnet, dass** zumindest ein Wärmeabschirmelement in einem Winkel größer als 45°, insbesondere in einem Winkel von etwa 90° zur Vorder- oder/und Rückfläche des Heizwärmetauschers angeordnet ist.

5. Vorrichtung nach einem der vorhergehenden Ansprüche, **dadurch gekennzeichnet, das** zumindest ein Wärmeabschirmelement zumindest bereichsweise zellenartig aufgebaut ist, wobei Zellwände Durchströmungsöffnungen einschließen.

6. Vorrichtung nach Anspruch 5, **dadurch gekennzeichnet, dass** zumindest Teile der Durchströmungsöffnungen einen runden, eckigen oder sechseckigen Querschnitt aufweisen.

7. Vorrichtung nach einem Ansprüche 5 oder 6, **dadurch gekennzeichnet, dass** die die Querschnittsflächen der Durchströmungsöffnungen in ihrer Größe und/oder Form unterschiedlich ausgebildet sind.

8. Vorrichtung nach einem der Ansprüche 5 bis 7, **dadurch gekennzeichnet, dass** die Höhe (D) der Zellwände zwischen 6 und 15 mm beträgt.

9. Vorrichtung nach einem der vorhergehenden Ansprüche, **dadurch gekennzeichnet, dass** zumindest ein Wärmeabschirmelement (444) im Gehäuse wieder lösbar, insbesondere anclipsbar oder einschiebbar, befestigt ist.

## Claims

1. A heating and air-conditioning system, particularly for a motor vehicle, comprising a housing, a heating heat exchanger (420) which is disposed in an air heating branch and has a front surface on the air inflow side and a back surface on the air outflow side, an air flow control means, and at least one heat shield element (444), the heat shield element (444) being configured at least in some regions at a distance from the surfaces of the heat exchanger (420) and disposed on the air inflow side of the heat exchanger, **characterized in that** the heat shield element (444) is disposed inclined at an angle with respect to the front and/or back surfaces of the heating heat exchanger (420).

2. The apparatus according to claim 1, **characterized in that** at least one heat shield element is disposed on the air outflow side of the heating heat exchanger.

3. An apparatus according to any one of the preceding claims, **characterized in that** at least one heat shield element is configured separate from the heating heat exchanger by way of a wall region of the housing.

4. An apparatus according to any one of the preceding claims, **characterized in that** at least one heat shield element is disposed at an angle of more than 45°, in particular at an angle of approximately 90° with respect to the front and/or back surfaces of the heating heat exchanger.

5. An apparatus according to any one of the preceding claims, **characterized in that** at least one heat shield element has a cell-like configuration at least in some regions, wherein cell walls enclose flow openings.

6. The apparatus according to claim 5, **characterized in that** at least parts of the flow openings have a round, angular, or hexagonal cross-section.

7. The apparatus according to claim 5 or 6, **characterized in that** the cross-sectional surfaces of the flow openings have different configurations with respect to the sizes and/or shapes thereof.

8. An apparatus according to any one of claims 5 to 7, **characterized in that** the height (D) of the cell walls is between 6 and 15 mm.

9. An apparatus according to any one of the preceding claims, **characterized in that** at least one heat shield element (444) is fastened detachably in the housing, in particular in a clip-on or insertable manner.

## Revendications

1. Système de chauffage et / ou de climatisation, en particulier pour un véhicule automobile, comprenant un carter, un échangeur de chaleur de chauffage (420) disposé dans un circuit secondaire thermique du ventilateur et comprenant une face avant située sur le côté de l'entrée d'air et une face arrière située sur le côté de l'évacuation d'air, un moyen de commande de flux d'air et au moins un élément formant un bouclier thermique (444), où l'élément formant un bouclier thermique (444) est configuré en étant au moins partiellement espacé des faces de l'échangeur de chaleur de chauffage (420) et disposé sur le côté de l'entrée d'air de l'échangeur de chaleur de chauffage, **caractérisé en ce que** l'élément formant un bouclier thermique (444) est disposé en étant incliné suivant un angle, par rapport à la face avant et / ou arrière de l'échangeur de chaleur de chauffage (420).

2. Dispositif selon la revendication 1, **caractérisé en ce qu'**au moins un élément formant un bouclier thermique est disposé sur le côté de l'évacuation d'air de l'échangeur de chaleur de chauffage.

3. Dispositif selon l'une ou l'autre des revendications précédentes, **caractérisé en ce qu'**au moins un élément formant un bouclier thermique est configuré au moyen d'une zone de paroi du carter, séparée de l'échangeur de chaleur de chauffage.

4. Dispositif selon l'une quelconque des revendications précédentes, **caractérisé en ce qu'**au moins un élément formant un bouclier thermique est disposé suivant un angle supérieur à 45°, en particulier suivant un angle à peu près de 90° par rapport à la face avant et / ou arrière de l'échangeur de chaleur de chauffage.

5. Dispositif selon l'une quelconque des revendications précédentes, **caractérisé en ce qu'**au moins un élément formant un bouclier thermique est constitué au moins partiellement de façon alvéolaire, où des parois alvéolaires comprennent des ouvertures d'écoulement.

6. Dispositif selon la revendication 5, **caractérisé en ce qu'**au moins des parties des ouvertures d'écoulement présentent une section ronde, angulaire ou hexagonale.

7. Dispositif selon la revendication 5 ou 6, **caractérisé en ce que** les surfaces de section des ouvertures d'écoulement, dans leur taille et / ou leur forme, sont configurées de façon différente.

8. Dispositif selon l'une quelconque des revendications 5 à 7, **caractérisé en ce que** la hauteur (D) des parois alvéolaires est comprise entre 6 mm et 15 mm.

9. Dispositif selon l'une quelconque des revendications précédentes, **caractérisé en ce qu'**au moins un élément formant un bouclier thermique (444) est fixé dans le carter, en pouvant être à nouveau démonté, en particulier clipsé ou inséré.
